# EUROPEAN PATENT APPLICATION

(11) **EP 2 720 342 A1**
(43) Date of publication of application: **16.04.2014**
(21) Application number: 11867152.8
(22) Date of filing: 09.06.2011
(51) Int. Cl.: H02J 7/00, B60L 11/18, H02J 17/00

(54) **POWER-RECEIVING DEVICE, VEHICLE, AND NON-CONTACT POWER SUPPLY SYSTEM**

(71) Applicant: TOYOTA JIDOSHA KABUSHIKI KAISHA, Toyota-shi, Aichi-ken, 471-8571 (JP)
(72) Inventor: NAKAMURA, Toru, Aichi-ken 471-8571 (JP); ICHIKAWA, Shinji, Aichi-ken 471-8571 (JP)
(74) Representative: Winter, Brandl, Fürniss, Hübner, Röss, Kaiser, Polte - Partnerschaft
(86) International application number: PCT/JP2011/063255
(87) International publication number: WO 2012/169047

(57) **Abstract**

A contactless power feeding system (10) includes a power transmitting device (200) including a power transmitting unit (220) and a power receiving device including a power receiving unit (110), and allows the power transmitting unit (220) and the power receiving unit (110) to electromagnetically resonate with each other to supply electric power from the power transmitting unit (220) to the power receiving unit (110) contactlessly. The power receiving device includes a power storage device (190) for storing therein the electric power received by the power receiving unit (110), and a light emitting unit (172) receiving the electric power received by the power receiving unit (110) and emitting light, and varying in brightness according to the electric power received. The electric power received by the power receiving unit (110) varies according to a positional displacement between the power transmitting unit (220) and the power receiving unit (110). The user can recognize the positional displacement between the power receiving unit (110) and the power transmitting unit (220) from information provided from an interface unit (165) relevant to the brightness of the light emitting unit (172).

## Description

### TECHNICAL FIELD

The present invention relates to a power receiving device, a vehicle and a contactless power feeding system, and more specifically to contactless power feeding technology employed to transfer electric power through electromagnetic resonance.

### BACKGROUND ART

Electric vehicles, hybrid vehicles and similar vehicles are attracting large attention as environmentally friendly vehicles. These vehicles are equipped with an electric motor for generating driving force to drive the vehicle, and a rechargeable power storage device for storing electric power to be supplied to the electric motor. Note that hybrid vehicles include a vehicle equipped with an electric motor and an internal combustion engine as a source of driving force to drive the vehicle, a vehicle equipped with a power storage device and a fuel battery as a direct current (DC) power source for driving the vehicle, and the like.

As a method to transfer electric power to such a vehicle from a power supply external to the vehicle, wireless power transfer without using a power supply code, a power transfer cable, or the like is attracting attention in recent years. This wireless power transfer technology is known mainly as the following three techniques: power transfer through electromagnetic induction; power transfer via electromagnetic wave such as microwave; and power transfer by a resonance method.

Of these techniques, the resonance method is a contactless power transfer technique causing paired resonators (e.g., paired resonant coils) to resonate in an electromagnetic field (a near field) to transfer electric power via the electromagnetic field. This technique allows such large electric power as several kW to be transferred over a relatively long distance (for example of several meters).

Such contactless power feeding is significantly affected by the positional relationship between a power transmitting device (or a primary side) and a power receiving device (or a secondary side) in efficiency in transferring electric power.

Japanese Patent Laying-Open No. 2000-092615 (PTD 1) discloses an electric vehicle charging system, when connecting a power feeding coupler of a power feeding device to a charging coupler of an electric vehicle, to detect the couplers' relative positions via a photoelectronic sensor provided at the power feeding coupler (or a primary side) and a reflector plate provided at the charging coupler (or a secondary side).

### CITATION LIST

### PATENT DOCUMENTS

PTD 1: Japanese Patent Laying-Open No. 2000-092615
PTD 2: Japanese Patent Laying-Open No. 2010-119251
PTD 3: Japanese Patent Laying-Open No. 2008-295297
PTD 4: WO 2010/131346

### SUMMARY OF INVENTION

### TECHNICAL PROBLEM

While Japanese Patent Laying-Open No. 2000-092615 (PTD 1) does disclose a configuration relating to a power feeding system in a contact manner, it is, however, directed to positioning primary and secondary sides. However, when a photoelectronic sensor is used, as described in Japanese Patent Laying-Open No. 2000-092615 (PTD 1), outdoor in particular, external light can affect it and thus prevent accurate positional detection.

Furthermore, WO 2010/131346 (PTD 4) discloses the configuration employing a resonant method, in which a distance between a power transmitting device and a power receiving device (or positional displacement) is detected by comparing transmitting electric power and received electric power in voltage for aligning the devices. However, there is a demand in the positional alignment for less electromagnetic field leakage and more efficient power transfer.

The present invention has been made to solve such a problem, the object is to, in a contactless power feeding system using a resonant method, decrease electromagnetic field leakage when aligning a power transmitting device and a power receiving device, and to improve robustness of transferring electric power.

### SOLUTION TO PROBLEM

The present invention provides a power receiving device configured to receive electric power that is transferred from a power transmitting device through electromagnetic resonance contactlessly. The power receiving device includes: a power receiving unit configured to electromagnetically resonate with a power transmitting unit included in the power transmitting device to receive electric power from the power transmitting device; a power storage device configured to store therein the electric power received by the power receiving unit; and a light emitting unit configured to receive the electric power received by the power receiving unit to emit light, and vary in brightness with the electric power received. The electric power received by the power receiving unit varies according to positional displacement caused between the power transmitting unit and the power receiving unit.

Preferably, the power receiving device further includes a rectifier configured to rectify the electric power received by the power receiving unit and output the rectified electric power to the power storage device. The light emitting unit receives AC power from a path interconnecting the power receiving unit and the rectifier.

Preferably, the light emitting unit includes an LED device configuring a full wave rectification circuit.

Preferably, the power receiving device further includes a rectifier configured to rectify the electric power received by the power receiving unit and output the rectified electric power to the power storage device. The light emitting unit receives DC power from a path interconnecting the rectifier and the power storage device.

Preferably, the power transmitting device transmits electric power for recognizing the positional displacement between the power transmitting unit and the power receiving unit before the power transmitting device transmits electric power for charging the power storage device, and the light emitting unit receives the electric power received by the power receiving unit when the power transmitting device transmits electric power for recognizing the positional displacement.

Preferably, the power receiving device further includes a switching unit configured to switch between supply and cut off of the electric power to the light emitting unit, which is received by the power receiving unit.

Preferably, the transmitted electric power used to transmit electric power for recognizing the positional displacement is smaller than the transmitted electric power used to transmit electric power for charging the power storage device.

Preferably, the power receiving device further includes: a light receiving unit configured to receive light from the light emitting unit; and a control device configured to detect the positional displacement between the power transmitting unit and the power receiving unit, based on the brightness of the light emitting unit detected by the light receiving unit.

Preferably, the control device determines that positional displacement between the power transmitting unit and the power receiving unit becomes smaller as the brightness of the light emitting unit is represented by a larger value.

Preferably, the control device transmits electric power for charging the power storage device when a value indicating the brightness of the light emitting unit exceeds a predetermined threshold value.

Preferably, the power receiving device further includes an interface unit configured to provide a user with information. The interface unit provides the user with information relevant to the brightness of the light emitting unit.

Preferably, the light emitting unit includes a light emitting device, and the light emitting device is disposed at the interface unit to allow the user to visibly recognize light emitted by the light emitting device.

Preferably, the power receiving device further includes: a light receiving unit configured to receive light from the light emitting unit; and a control device configured to receive a signal relevant to the light of the light emitting unit received by the light receiving unit and output to the interface unit the information relevant to the brightness of the light emitting unit.

The present invention provides a vehicle including: a power receiving unit configured to electromagnetically resonate with a power transmitting unit included in a power transmitting device to receive electric power from the power transmitting device contactlessly; a power storage device configured to store therein the electric power received by the power receiving unit; a drive device configured to use electric power received from the power storage device to generate force to drive and thus cause the vehicle to travel; and a light emitting unit configured to receive the electric power that is received by the power receiving unit to emit light, and vary in brightness with the electric power received. The electric power received by the power receiving unit varies according to positional displacement caused between the power transmitting unit and the power receiving unit.

The present invention provides a contactless power feeding system configured to transfer electric power through electromagnetic resonance contactlessly. The contactless power feeding system includes: a power transmitting device including a power transmitting unit; and a power receiving device including a power receiving unit electromagnetically resonating with the power transmitting unit. The power receiving device includes a power storage device configured to store therein electric power received by the power receiving unit, and a light emitting unit configured to receive the electric power that is received by the power receiving unit to emit light, and vary in brightness with the electric power received. The electric power received by the power receiving unit varies according to positional displacement caused between the power transmitting unit and the power receiving unit.

### ADVANTAGEOUS EFFECTS OF INVENTION

The present invention can thus provide a contactless power feeding system using a resonant method that allows for decreasing electromagnetic field leakage when aligning a power transmitting device and a power receiving device and for improving robustness of transmitting electric power.

### BRIEF DESCRIPTION OF DRAWINGS

Fig. 1 shows a schematic diagram of a contactless power feeding system for a vehicle according to a first embodiment of the present invention.
Fig. 2 shows a specific configuration of the contactless power feeding system shown in Fig. 1.
Fig. 3 shows an example of a specific configuration of a matching unit shown in Fig. 1.
Fig. 4 shows an example of a specific configuration of a light emitting unit shown in Fig. 1.
Fig. 5 shows another example of a specific configuration of the light emitting unit shown in Fig. 1.
Fig. 6 is a diagram for illustrating a principle of power transfer by a resonance method.
Fig. 7 is a graph representing a relationship between a distance from a current source (a magnetic current source) and electromagnetic field intensity.
Fig. 8 is a diagram for illustrating a relationship between positional displacement between power transmitting and receiving units and the brightness of the light emitting unit.
Fig. 9 is a flowchart for illustrating a process of controlling starting power-feeding performed in the contactless power feeding system according to the first embodiment.
Fig. 10 shows a specific configuration of a contactless power feeding system according to a second embodiment.
Fig. 11 shows a specific configuration of a contactless power feeding system according to a third embodiment.

### DESCRIPTION OF EMBODIMENTS

Embodiments of the present invention will be described hereinafter in detail with reference to the drawings. In the drawings, identical or corresponding components are identically denoted and will not be described repeatedly.

### First Embodiment

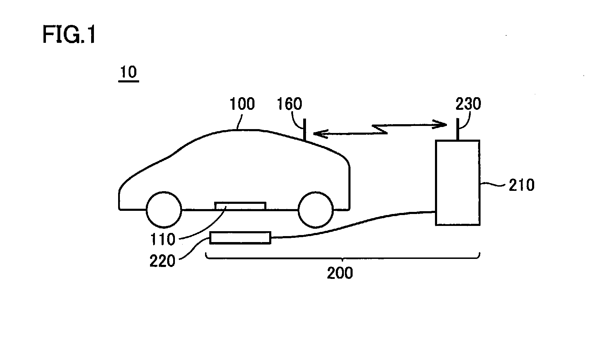

Fig. 1 shows a schematic diagram of a power feeding system 10 for a vehicle according to a first embodiment of the present invention. With reference to Fig. 1, power feeding system 10 includes a vehicle 100 and a power transmitting device 200. Vehicle 100 includes a power receiving unit 110 and a communication unit 160. Power transmitting device 200 includes a power supply device 210 and a power transmitting unit 220. Furthermore, power supply device 210 includes a communication unit 230.

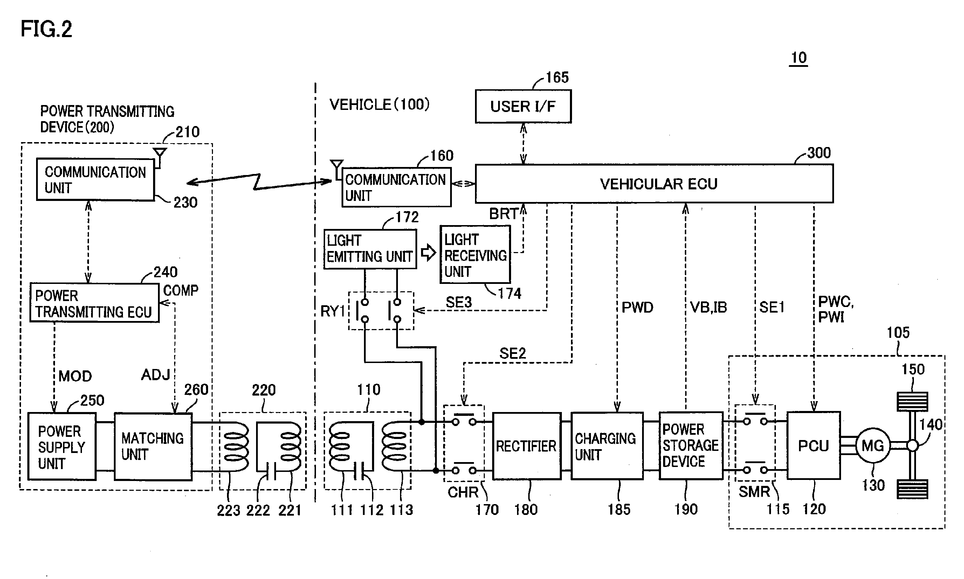

Power receiving unit 110 is provided to the vehicle for example at a bottom surface, and configured.to contactlessly receive electric power transmitted from power transmitting unit 220 of power transmitting device 200. More specifically, as will be described hereinafter with reference to Fig. 2, power receiving unit 110 includes a resonant coil and resonates with a resonant coil that is included in power transmitting unit 220 via an electromagnetic field to receive electric power from power transmitting unit 220 contactlessly. Communication unit 160 is a communication interface for performing wireless communication between vehicle 100 and power transmitting device 200.

Power transmitting device 200 includes power supply device 210 to receive alternating current (AC) power for example from a commercial power supply, convert it to electric power of high frequency, and output the converted power to power transmitting unit 220. Power supply device 210 generates high frequency electric power having a frequency for example of 1 MHz to several tens MHz.

Power transmitting unit 220 is provided on a floor surface in a parking lot or the like and configured to transmit high frequency electric power supplied from power supply device 210 to power receiving unit 110 of vehicle 100 contactlessly. More specifically, power transmitting unit 220 includes a resonant coil and resonates with a resonant coil that is included in power receiving unit 110 via an electromagnetic field to transmit electric power to power receiving unit 110 contactlessly. Communication unit 230 is a communication interface for performing wireless communication between power transmitting device 200 and vehicle 100.

Fig. 2 shows a specific configuration of power feeding system 10 shown in Fig. 1. With reference to Fig. 2, power transmitting device 200 includes power supply device 210 and power transmitting unit 220, as has been described above. In addition to communication unit 230, power supply device 210 further includes a control device implemented as a power transmitting ECU 240, a power supply unit 250, and a matching unit 260. Furthermore, power transmitting unit 220 includes a primary resonant coil 221, a capacitor 222, and a primary coil 223.

Power supply unit 250 is controlled by a control signal MOD issued from power transmitting ECU 240, and receives electric power from an AC power supply such as a commercial power supply and converts it to electric power of high frequency. Power supply unit 250 then supplies the converted, high frequency electric power to primary coil 223 via matching unit 260. Power supply unit 250 generates high frequency electric power having a frequency for example of 1 MHz to several tens MHz.

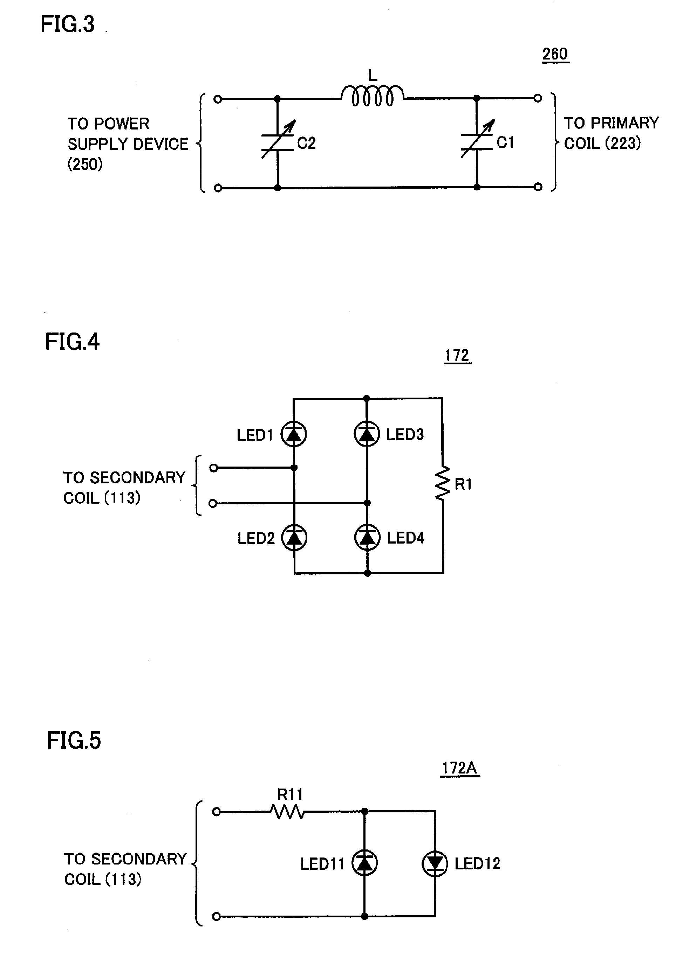

Matching unit 260 is a circuit for impedance matching between power transmitting device 200 and vehicle 100. Fig. 3 shows an example in configuration of matching unit 260, configured including variable capacitors C1, C2, and an inductor L. Inductor L is connected between power supply unit 250 and primary coil 223 of power transmitting unit 220. Variable capacitor C1 is connected to an end of inductor L that is connected to power transmitting unit 220. Variable capacitor C2 is connected to an end of inductor L that is connected to power supply unit 250.

Matching unit 260 is controlled by a control signal ADJ provided from power transmitting ECU 240, and adjusts the variable capacitors so that power transmitting device 200 has an impedance matched to that associated with vehicle 100. Furthermore, matching unit 260 outputs to power transmitting ECU 240 a signal COMP indicating that the impedance adjustment has been completed.

Primary resonant coil 221 transfers electric power through electromagnetic resonance to secondary resonant coil 111 included in vehicle 100 at power receiving unit 110.

The number of turns of primary resonant coil 221 is set, as appropriate, so that a Q value indicating resonance strength between primary resonant coil 221 and secondary resonant coil 111 of vehicle 100 (e.g., Q > 100), κ indicating a degree of coupling therebetween, and the like are increased based on a distance between primary resonant coil 221 and secondary resonant coil 111, a resonance frequency of primary resonant coil 221 and secondary resonant coil 111, and the like.

Capacitor 222 is connected to primary resonant coil 221 at opposite ends and cooperates with primary resonant coil 221 to form an LC resonance circuit. A capacitance of capacitor 222 is set as appropriate to be a prescribed resonance frequency depending on an inductance of primary resonant coil 221. Note that capacitor 222 may be dispensed with if desired resonant frequency is obtained from a stray capacitance that primary resonant coil 221 per se has.

Primary coil 223 is coaxial with primary resonant coil 221 and can be magnetically coupled with primary resonant coil 221 through electromagnetic induction. Primary coil 223 receives high frequency electric power via matching unit 260 and transmits the received electric power to primary resonant coil 221 through electromagnetic induction.

Communication unit 230 is a communication interface for performing wireless communication between power transmitting device 200 and vehicle 100, as has been set forth above. Communication unit 230 receives from communication unit 160 of vehicle 100 vehicular information and a signal of an instruction to start and stop power transmission, and outputs these pieces of information to power transmitting ECU 240. Furthermore, communication unit 230 receives from power transmitting ECU 240 a signal issued from matching unit 260 and indicating that it has completed impedance adjustment, and communication unit 230 outputs the received signal to vehicle 100.

Power transmitting ECU 240 includes a central processing unit (CPU), a storage device, and an input/output buffer, none of which is shown in Fig. 1, and it receives a signal from each sensor or the like, outputs a control signal to each device, and controls each device in power supply device 210. Note that such control is not limited to process by software, and may instead be processed by dedicated hardware (or electronic circuitry).

In addition to power receiving unit 110 and communication unit 160, vehicle 100 includes a charging relay (CHR) 170, a rectifier 180, a charging unit 185, a power storage device 190, a system main relay (SMR) 115, a power control unit (PCU) 120, a motor generator 130, a driving force transmission gear 140, a driving wheel 150, a control device implemented as a vehicular electronic control unit (ECU) 300, and a user interface (I/F) 165. Power receiving unit 110 includes a secondary resonant coil 111, a capacitor 112, and a secondary coil 113. Furthermore, SMR 115, PCU 120, motor generator 130, driving force transmission gear 140 and driving wheel 150 configure a drive device 105.

Note that while the present embodiment is described with vehicle 100 described as an electric vehicle by way of example, any vehicle that can use electric power stored in a power storage device to travel is applicable to vehicle 100. Vehicle 100 in other examples includes a hybrid vehicle equipped with an engine, a fuel cell vehicle, and the like.

Secondary resonant coil 111 receives electric power from primary resonant coil 221 included in power transmitting device 200 via electromagnetic field through electromagnetic resonance.

The number of turns of secondary resonant coil 111 is set, as appropriate, so that a Q value indicating resonance strength between primary resonant coil 221 of power transmitting device 200 and secondary resonant coil 111 (e.g., Q > 100), κ indicating a degree of coupling therebetween, and the like are increased based on a distance between primary resonant coil 221 and secondary resonant coil 111, a resonance frequency of primary resonant coil 221 and secondary resonant coil 111, and the like.

Capacitor 112 is connected to secondary resonant coil 111 at opposite ends and cooperates with secondary resonant coil 111 to form an LC resonance circuit. A capacitance of capacitor 112 is set as appropriate to be a prescribed resonance frequency depending on an inductance of secondary resonant coil 111 has. Note that capacitor 112 may be dispensed with if desired resonant frequency is obtained from a stray capacitance that secondary resonant coil 111 per se has.

Secondary coil 113 is coaxial with secondary resonant coil 111 and can be magnetically coupled with secondary resonant coil 111 through electromagnetic induction. Secondary coil 113 retrieves the electric power that is received by secondary resonant coil 111 through electromagnetic induction, and outputs the retrieved electric power to rectifier 180.

Rectifier 180 receives AC power from secondary coil 113 via CHR 170, rectifies the received AC power, and outputs the rectified DC power to power storage device 190. Rectifier 180 can be configured including a diode bridge and a smoothing capacitor (neither is shown), for example. A so-called switching regulator using switching control to provide rectification may be employed as rectifier 180, however, in the case where rectifier 180 is included in power receiving unit 110, it is more preferable employ a static rectifier as rectifier 180, such as a diode bridge, in order to prevent a switching element from for example erroneously operating as an electromagnetic field is generated.

CHR 170 is electrically connected between power receiving unit 110 and rectifier 180. CHR 170 is controlled by a control signal SE2 issued from vehicular ECU 300 to switch between supply and cut off of electric power from power receiving unit 110 to rectifier 180.

Charging unit 185 is controlled by a control signal PWD issued from vehicular ECU 300, and converts the rectified DC voltage from rectifier 180 to a charging voltage that power storage device 190 can tolerate. Charging unit 185 can be implemented for example with a DC/DC converter. Note that if the rectified DC voltage in vehicle 100 is adjusted to the charging voltage that power storage device 190 can tolerate by matching unit 260 of power transmitting device 200, the DC voltage rectified by rectifier 180 may be directly output to power storage device 190. This eliminates the necessity of voltage conversion by charging unit 185 and thus allows further increased efficiency.

Power storage device 190 is an electric power storage component configured to be chargeable and dischargeable . Power storage device 190 for example includes a rechargeable battery such as a lithium ion battery, a nickel metal hydride battery or a lead acid battery, or a power storage element such as an electric double layer capacitor.

Power storage device 190 is connected to charging unit 185 and stores therein electric power received by power receiving unit 110 and rectified by rectifier 180. Furthermore, power storage device 190 is also connected to PCU 120 via SMR 115. Power storage device 190 supplies PCU 120 with electric power for generating force to drive the vehicle. Furthermore, power storage device 190 stores therein electric power generated by motor generator 130. Power storage device 190 provides an output of approximately 200 V, for example.

Power storage device 190 is provided with a voltage sensor and a current sensor for sensing voltage VB of power storage device 190 and current IB input to and output from power storage device 190, respectively. These sensed values are output to vehicular ECU 300. Vehicular ECU 300 calculates a state of charge (SOC) of power storage device 190 from voltage VB and current IB.

SMR 115 is inserted in electric power lines interconnecting power storage device 190 and PCU 120. SMR 115 is controlled by a control signal SE1 issued from vehicular ECU 300 to switch between supply and cut off of electric power between power storage device 190 and PCU 120.

Although not shown, PCU 120 includes a converter, an inverter and the like. The converter is controlled by a control signal PWC issued from vehicular ECU 300 to convert voltage received from power storage device 190. The inverter is controlled by a control signal PWI issued from vehicular ECU 300 to use the electric power converted by the converter to drive motor generator 130.

Motor generator 130 is an AC rotating electric machine and, for example, is a permanent-magnet type synchronous motor having a rotor with a permanent magnet embedded therein.

Output torque of motor generator 130 is transmitted to driving wheel 150 via driving force transmission gear 140 and thus causes vehicle 100 to travel. When regenerative breaking of vehicle 100, motor generator 130 can generate electric power by the rotative force of driving wheel 150. The generated electric power is then converted by PCU 120 to electric power for charging to power storage device 190.

A hybrid vehicle having an engine (not shown) in addition to motor generator 130 has the engine and motor generator 130 cooperatively operated to generate required vehicular driving force. In that case, it is also possible to charge power storage device 190 with electric power generated by the engine's rotation.

Communication unit 160 is a communication interface for performing wireless communication between vehicle 100 and power transmitting device 200, as has been set forth above. Communication unit 160 receives vehicular information from vehicular ECU 300 and outputs it to power transmitting device 200. Furthermore, communication unit 160 outputs a signal to power transmitting device 200 to instruct power transmitting device 200 to start/stop power transmission.

User interface 165 receives user inputs, and outputs information to a user. User interface 165 for example receives a command via a user operation to start external charging. Furthermore, user interface 165 provides the user with information, such as positional information of power receiving unit 110 and power transmitting unit 220, the state of charge of power storage device 190, and the like.

Vehicle 100 further includes a light emitting unit 172, a light receiving unit 174 and a relay RY1 as a configuration for aligning power receiving unit 110 and power transmitting unit 220.

Light emitting unit 172 is connected to secondary coil 113 of power receiving unit 110 via relay RY1. Light emitting unit 172 is configured to vary in brightness depending on the magnitude of the AC power received by power receiving unit 110. When the resonance method is exploited to provide contactless power feeding, power receiving unit 110 receives varying electric power depending on positional displacement between power receiving unit 110 and power transmitting unit 220. In other words, light emitting unit 172 varies in brightness depending on positional displacement between power receiving unit 110 and power transmitting unit 220.

Relay RY1 is controlled by a control signal SE3 issued from vehicular ECU 300, and relay RY1 is closed when positional displacement between power receiving unit 110 and power transmitting unit 220 is detected.

Fig. 4 shows an example in configuration of light emitting unit 172. With reference to Fig. 4, light emitting unit 172 includes LEDs 1-4 and a resistor R1. LEDs 1-4 form a diode bridge and provide full wave rectification of AC voltage received from power receiving unit 110. Resistor R1 is connected to the diode bridge at an output end. This configuration allows the direct current rectified by LEDs 1-4 to pass through resistor R1 and thus cause the LED to emit light. A current that passes through the LEDs varies with electric power received, and the LEDs can vary in brightness accordingly.

Fig. 5 shows another example in configuration of the light emitting unit. Fig. 5 shows a light emitting unit 172A, which includes LEDs 11 and 12 and a resistor R11. Resistor R11 and LED 11 are connected in series via relay RY1 to secondary coil 113 at opposite ends. LED 12 is connected to LED11 in antiparallel. This configuration also allows the LEDs to emit light by AC power received from power receiving unit 110.

The configurations depicted in Figs. 4 and 5 allow emission for both positive AC voltage and negative AC voltage and can reduce reflected electric power attributed to the light emitting unit. Note that it is preferable that resistors R1, R11 be minimized in resistance within a range that ensures a current passing through the LED and also allows matching unit 260 in power transmitting device 200 to adjust impedance to reduce the power consumption of the light emitting unit.

While in Fig. 4 and Fig. 5 the light emitting device is described as an LED by way of example, other types of light emitting devices, such as a typical electric bulb, may be used that do not consume large electric power, as compared with resistors R1, R11. The LED is more suitably used in view of lifetime or the like.

Again, with reference to Fig. 2, light receiving unit 174 detects light received from light emitting unit 172, and outputs to vehicular ECU 300 a signal BRT relevant to the detected light's brightness.

Vehicular ECU 300 includes a CPU, a storage device, and an input/output buffer, none of which is shown in Fig. 1, and it receives a signal from each sensor or the like and outputs a control signal to each device, and also controls vehicle 100 and each device. Note that such control is not limited to process by software, and may instead be processed by dedicated hardware (or electronic circuitry).

When vehicular ECU 300 receives a signal via a user operation or the like to start charging, then, in response to a prescribed condition having been established, vehicular ECU 300 outputs a signal via communication unit 160 to power transmitting device 200 to instruct power transmitting device 200 to start power transmission. Furthermore, vehicular ECU 300 operates in response to power storage device 190 having been fully charged, a user operation, or the like to output a signal via communication unit 160 to power transmitting device 200 to instruct power transmitting device 200 to stop power transmission.

Furthermore, in order to align the vehicle 100 power receiving unit 110 and power transmitting unit 220, vehicular ECU 300 detects positional displacement between power receiving unit 110 and power transmitting unit 220, based on signal BRT received from light receiving unit 174 and relevant to brightness. Then, depending on the detected positional displacement, vehicular ECU 300 performs automatic parking, provides a user via user interface 165 with guidance information about a position to park the vehicle, and/or the like.

For this positional displacement detection, vehicular ECU 300 outputs a signal via communication unit 160 to power transmitting device 200 to instruct power transmitting device 200 to transmit electric power for the positional displacement detection before transmitting electric power for charging power storage device 190.

Note that the configuration of vehicle 100 excluding SMR 115, PCU 120, motor generator 130, driving force transmission gear 140 and driving wheel 150 configuring drive device 105 corresponds to a "power receiving device" in the present invention.

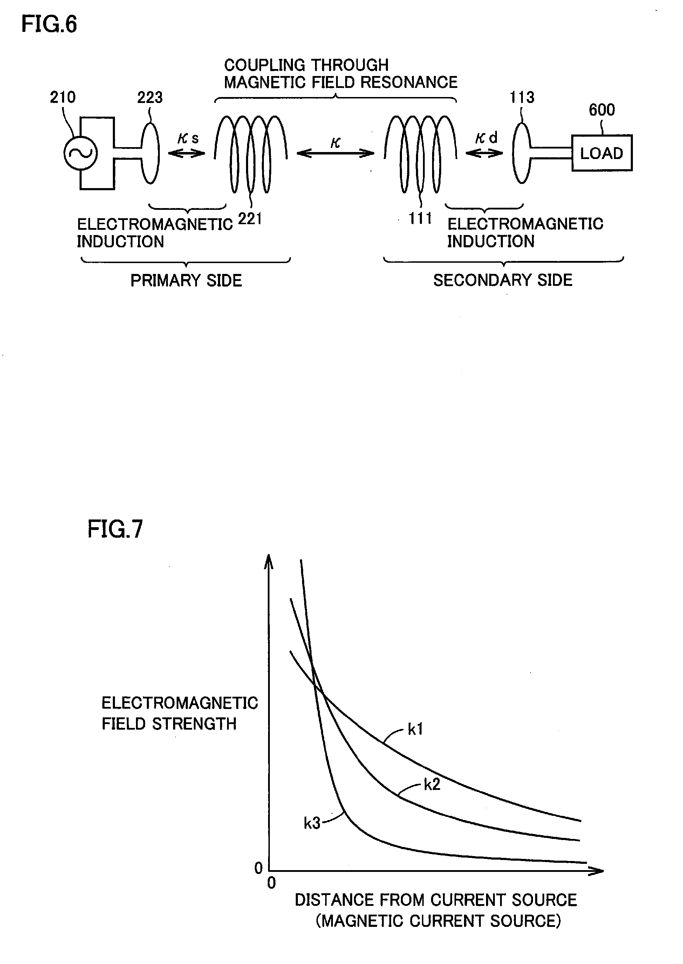

Reference will now be made to Figs. 6 and 7 to describe contactless power feeding through electromagnetic resonance (hereinafter also referred to a "resonance method").

Fig. 6 is a diagram for illustrating a principle of power transfer by the resonance method. With reference to Fig. 6, the resonance method employs two LC resonant coils having equal natural frequencies, respectively, to resonate with each other, as two tuning forks do, in an electromagnetic field (a near field) to transfer electric power from one coil to the other coil via the electromagnetic field.

More specifically, primary coil 223 that is an electromagnetic induction coil is connected to high frequency power supply device 210 so that primary resonant coil 221 magnetically coupled with primary coil 223 through electromagnetic induction is fed with high frequency electric power of 1 MHz to several tens MHz. Primary resonant coil 221 is an LC resonator constructed from its own inductance and stray capacitance or a condenser (not shown) connected to the coil at the opposite ends, and resonates with secondary resonant coil 111 having a natural frequency equal to that of primary resonant coil 221 via an electromagnetic field (a near field). As a result, energy (or electric power) is transferred from primary resonant coil 221 to secondary resonant coil 111 via the electromagnetic field. The energy (or electric power) transferred to secondary resonant coil 111 is retrieved by secondary coil 113 that is an electromagnetic induction coil magnetically coupled with secondary resonant coil 111 through electromagnetic induction, and the retrieved energy (or electric power) is supplied to load 600. The resonance method allows power transfer to be done when primary resonant coil 221 and secondary resonant coil 111 have resonance strength indicated by a Q value larger than 100 for example. Note that load 600 in Fig. 6 corresponds to a device at the side of rectifier 180 from secondary coil 113 in Fig. 2.

Fig. 7 is a graph illustrating a relationship between a distance from a current source (a magnetic current source) and electromagnetic field intensity. Referring to Fig. 7, an electromagnetic field includes three components. A curve k1 represents a component in inverse proportion to a distance from a wave source, referred to as "radiation electromagnetic field". A curve k2 represents a component in inverse proportion to the square of the distance from the wave source, referred to as "induction electromagnetic field". A curve k3 represents a component in inverse proportion to the cube of the distance from the wave source, referred to as "static electromagnetic field".

Among these, there is a region in which an electromagnetic wave rapidly decreases in intensity as a function of the distance from the wave source, and the resonance method leverages this near field (or evanescent field) to transfer energy (or electric power). More specifically, the near field is utilized to resonate a pair of resonators having equal natural frequencies (for example, a pair of LC resonators) to transfer energy (or electric power) from one resonator (or a primary resonant coil) to the other resonator (or a secondary resonant coil). The near field does not propagate energy (or electric power) over a long distance, and the resonance method can thus transfer electric power with less energy loss than an electromagnetic wave, which transfers energy (or electric power) via the "radiation electromagnetic field" propagating energy over a long distance.

When such a resonance method is employed to provide contactless power feeding, the positional relationship between the power transmitting and receiving units has a significant effect on power transfer in efficiency. Accordingly, it is important to align the power transmitting unit and the power receiving unit.

When relative positions between the power transmitting and receiving units vary, the impedance of the power receiving unit as seen at the power transmitting unit varies. Accordingly, the power transmitting and receiving units with their relative positions displaced from desired relative positions will result in impedance departing from designed impedance, which in turn results in increased reflected electric power and hence inefficient power transfer.

In reality, it is difficult to match relative positions between the power transmitting and receiving units to designed, desired relative positions, and accordingly, in order to compensate for a positional displacement of some extent, the matching unit that has been described with reference to Fig. 2 may be provided to the power transmitting device (or the power receiving device). However, there is a limit to a range that can be adjusted by using the matching unit in view of cost effectiveness, and accordingly, it will be necessary to bring the positional displacement between the power transmitting and receiving units to fall within a tolerable range of a positional displacement that can be adjusted by the matching unit.

As has been set forth above, the positional displacement between the power transmitting and receiving units results in increased reflected electric power and the power receiving unit receives reduced electric power. Occasionally, this property is exploited to detect voltage of electric power received by the power receiving unit during power transmission to estimate a positional displacement (or a distance) between the power transmitting unit and the power receiving unit.

Such positional displacement detection requires transferring electric power between the power transmitting unit and the power receiving unit. The positional displacement detection is conducted generally while a vehicle parking operation is performed, and for example when the power transmitting unit and the power receiving unit have a significantly large positional displacement, an electromagnetic field that the power transmitting unit generates may leak therearound. Accordingly, if a technique is adopted that employs received electric power to detect positional displacement, minimizing electric power transmitted in detecting positional displacement is desired.

Accordingly, in the first embodiment, variation of received electric power in detecting positional displacement is estimated from the brightness of the light emitted from light emitting unit 172 described with reference to Fig. 2. As described above, light emitting unit 172 including a light emitting device implemented as an LED allows positional displacement detection to be conducted with significantly smaller power consumption (i.e., transmitted electric power) than for example providing a resistor between power lines that transmit received electric power and detecting voltage across the resistor would do.

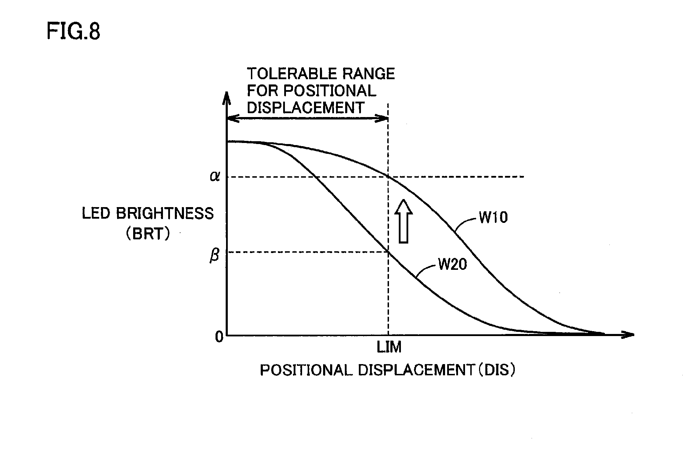

Fig. 8 is a diagram for illustrating a relationship between the positional displacement between the power transmitting and receiving units, and the brightness of the light emitting unit.

With reference to Fig. 8, as has been described above, increased positional displacement DIS results in reduced received electric power. Accordingly, as indicated in Fig. 8 by curves W10 and W20, as positional displacement DIS increases, a current that passes through light emitting unit 172 decreases and hence the LED's brightness BRT also decreases.

Then, if LED brightness BRT as detected is larger than an LED brightness threshold value corresponding to an upper limit value LIM of a tolerable range of positional displacement DIS that is determined from the adjustable range of matching unit 260 of Fig. 2, then it can be determined that positional displacement between the power transmitting and receiving units is within the tolerable range.

Herein, when positional displacement detection is conducted, CHR 170 is opened as described above and only light emitting unit 172 is connected to power receiving unit 110. Accordingly, there is a possibility that an impedance that is associated with the power receiving device in positional displacement detection may be different from that when a charging operation is performed. Given that constant electric power is transmitted, LED brightness BRT detected decreases (see curve W20) to be lower than when the impedance is appropriately adjusted (see curve W10). Accordingly, the LED brightness threshold value corresponding to upper limit value LIM of the tolerable positional displacement range is lowered, and, due to a characteristic in sensitivity of light receiving unit 174, whether or not a positional displacement falls within the tolerable range may less easily be determined.

Accordingly, when positional displacement detection is conducted, it is suitable to adjust matching unit 260 so that the LED brightness threshold value corresponding to the tolerable positional displacement range has a sufficiently large value, as indicated in Fig. 8 by curve W10.

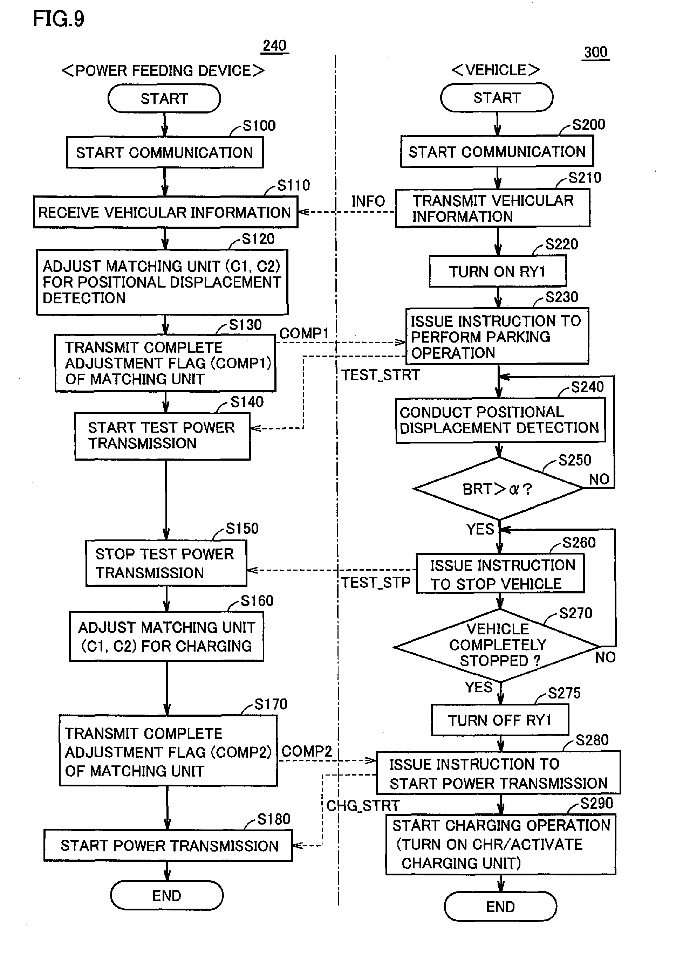

Fig. 9 is a flowchart for illustrating a process of starting power-feeding performed in contactless power feeding system 10 according to the first embodiment. The flowchart shown in Fig. 9 is implemented by periodically executing a program previously stored in power transmitting ECU 240 and vehicular ECU 300. It is noted that some step(s) can also be implemented via dedicated hardware (electronic circuitry).

Reference will first be made to Figs. 2 and 9 to describe a process performed in vehicle 100. At step (hereinafter abbreviated as "S") 200, vehicular ECU 300 starts to communicate with power transmitting device 200. Once vehicular ECU 300 has established communication with power transmitting device 200, vehicular ECU 300 transmits vehicular information INFO to power transmitting device 200. Vehicular information INFO includes a characteristic in impedance, SOC and the like of power storage device 190, the impedance of light emitting unit 172 and the like for example.

Subsequently, vehicular ECU 300 issues control signal SE3 to close relay RY and prepares alignment of power receiving unit 110 and power transmitting unit 220. In doing so, CHR 170 remains opened.

Then, when vehicular ECU 300 receives from power transmitting device 200 a completion flag COMP1 indicating that matching unit 260 has been adjusted for positional displacement detection, then the control proceeds to S230 and vehicular ECU 300 outputs a signal TEST_STRT to power transmitting device 200 to start test power transmission for positional displacement detection. While doing so, vehicular ECU 300 outputs an instruction via user interface 165 to instruct the user to start a parking operation. Note that if vehicle 100 has an automatic parking function, vehicular ECU 300 starts an automatic parking operation at S230.

At S240, vehicular ECU 300 conducts positional displacement detection based on signal BRT relevant to the brightness of light emitting unit 172 detected at light receiving unit 174. Then, vehicular ECU 300 determines at S250 whether signal BRT relevant to brightness is larger than a threshold value α described with reference to Fig. 8.

If signal BRT relevant to brightness is equal to or smaller than threshold value α (NO at S250), the control proceeds to S240 to continue the parking operation until signal BRT relevant to brightness exceeds threshold value α.

Once signal BRT relevant to brightness has exceeded threshold value α (YES at S250), the control proceeds to S260 and vehicular ECU 300 outputs an instruction to the user to stop vehicle 100. While doing so, vehicular ECU 300 outputs a signal TEST_STP to power transmitting device 200 to stop the test power transmission.

Subsequently, at S270, vehicular ECU 300 awaits completion of parking vehicle 100 (NO at S270).

Once vehicle 100 has been completely parked (YES at S270), the control proceeds to S275 and vehicular ECU 300 opens relay RY1.

Subsequently at S280 vehicular ECU 300 receives from power transmitting device 200 a completion flag COMP2 indicating that matching unit 260 has been adjusted for charging, and in response thereto, vehicular ECU 300 outputs a signal CHG_STRT to power transmitting device 200 to start a power transmission operation for charging power storage device 190.

Then, vehicular ECU 300 closes CHR 170 and also drives charging unit 185 to start charging power storage device 190 with the electric power transmitted from power transmitting device 200 and contactlessly received by power receiving unit 110.

Note that although not shown in Fig. 9, vehicular ECU 300 stops the power transmission operation of power transmitting device 200 once power storage device 190 has been fully charged.

Hereinafter a process performed in power transmitting device 200 will be described. At S 100, power transmitting ECU 240 starts to communicate with vehicle 100. Once power transmitting ECU 240 has established communication with vehicle 100, then at S110 power transmitting ECU 240 receives vehicular information INFO from vehicular ECU 300.

At S120, power transmitting ECU 240 adjusts variable capacitors C1, C2 of matching unit 260 to be adapted to an impedance of light emitting unit 172 included in vehicular information INFO received. Once matching unit 260 has been completely adjusted, power transmitting ECU 240 transmits adjustment completion flag COMP1 to vehicle 100.

At S 140, power transmitting ECU 240 starts test power transmission in response to having received signal TEST_STRT from vehicular ECU 300 to start test power transmission. The test power transmission employs electric power smaller than that transmitted in charging power storage device 190, and it is determined based on electric power required to cause light emitting unit 172 of vehicle 100 to emit light. If light emitting unit 172 employs such an LED as shown in Fig. 4 or Fig. 5, the test power transmission can be done with significantly small electric power. This can reduce an electromagnetic field leaking between power receiving unit 110 and power transmitting unit 220.

At S150, power transmitting ECU 240 stops the test power transmission in response to having received signal TEST_STP from vehicular ECU 300 to stop the test power transmission.

Subsequently, at S160, power transmitting ECU 240 adjusts matching unit 260, based on the impedance characteristic and SOC of the power receiving device and the like included in vehicular information INFO received at S110. Once matching unit 260 has been completely adjusted, the control proceeds to S 170 and power transmitting ECU 240 transmits adjustment completion flag COMP2 to vehicle 100.

When power transmitting ECU 240 receives signal CHG_STRT from vehicular ECU 300 to start power transmission for charging, the control proceeds to S 180 and power transmitting ECU 240 starts a power transmission operation using electric power larger than that for the test power transmission for charging.

Controlling according to the above process allows the power transmitting device and the power receiving device to be aligned based on the brightness of the light emitting unit as described above. This can reduce electric power required for the alignment and hence an electromagnetic field leaking in the alignment and also contribute to increased efficiency. Furthermore, the light receiving unit for positional displacement detection is electrically insulated from a power receiving path, and furthermore, the light emitting unit used for the alignment is disconnected from the power receiving path in charging the power storage device. This can reduce a conduction noise resulting from the light emitting unit and the light receiving unit in transmitting electric power for charging the power storage device, and contribute to increased robustness.

### Second Embodiment

In the first embodiment, the light from the light emitting unit is detected by the light receiving unit, and, based on the brightness of the detected light, the vehicular ECU outputs guidance to the user, an instruction of an automatic parking operation, and the like.

If a vehicle only has a function to provide guidance to the user, an LED or the like included in the light emitting unit can directly be provided at the user interface to provide user guidance without using a sensor such as the light receiving unit.

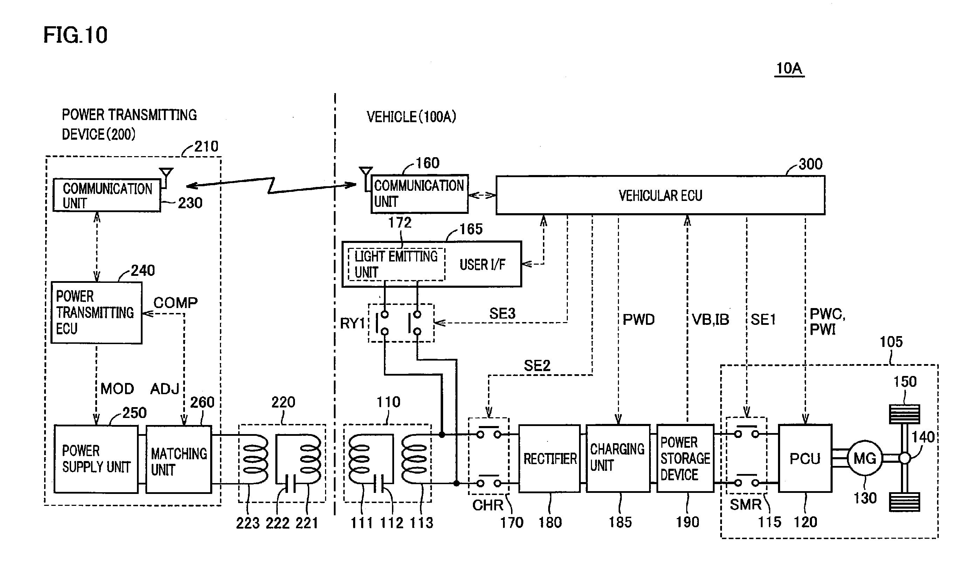

Fig. 10 shows a specific configuration of a contactless power feeding system 10A according to a second embodiment. Fig. 10 shows contactless power feeding system 10A including a vehicle 100A, which excludes light receiving unit 174 shown in Fig. 2. Those elements shown in Fig. 10 which are identical to those shown in Fig.2 will not be described repeatedly.

With reference to Fig. 10, vehicle 100A has light emitting unit 172 incorporated in user interface 165. As has been described with reference to Fig. 3 and Fig. 4, light emitting unit 172 includes an LED, for example, as a light emitting device. In the second embodiment, this LED is disposed on a surface of user interface 165 to allow the user to visibly recognize the light emitted by the LED.

This configuration allows the user to visibly recognize the brightness of the LED on user interface 165 and hence recognize positional displacement between power receiving unit 110 and power transmitting unit 220. This dispenses with the light receiving unit and can thus reduce the power consumption of the vehicle.

### Third Embodiment

In the first and second embodiments, light emitting unit 172 is configured to receive AC power received by power receiving unit 110, i.e., electric power before being rectified by rectifier 180, and thus emit light. The first and second embodiments provide a configuration allowing positional displacement detection to be conducted with rectifier 180 disconnected from a power transmission path and hence without an effect in impedance of rectifier 180, a power loss attributed to rectifier 180, or the like.

If light emitting unit 172 employs LED, however, then, as shown in Fig. 3 and Fig. 4, a plurality of LEDs will be required. Furthermore, power receiving unit 110 receives AC power that is of relatively as high a frequency as several tens MHz, and accordingly, light emitting unit 172 can only employ an LED having a satisfactory high frequency characteristic.

Accordingly in a third embodiment will be described a configuration supplying the light emitting unit with the rectified, DC power provided by the rectifier.

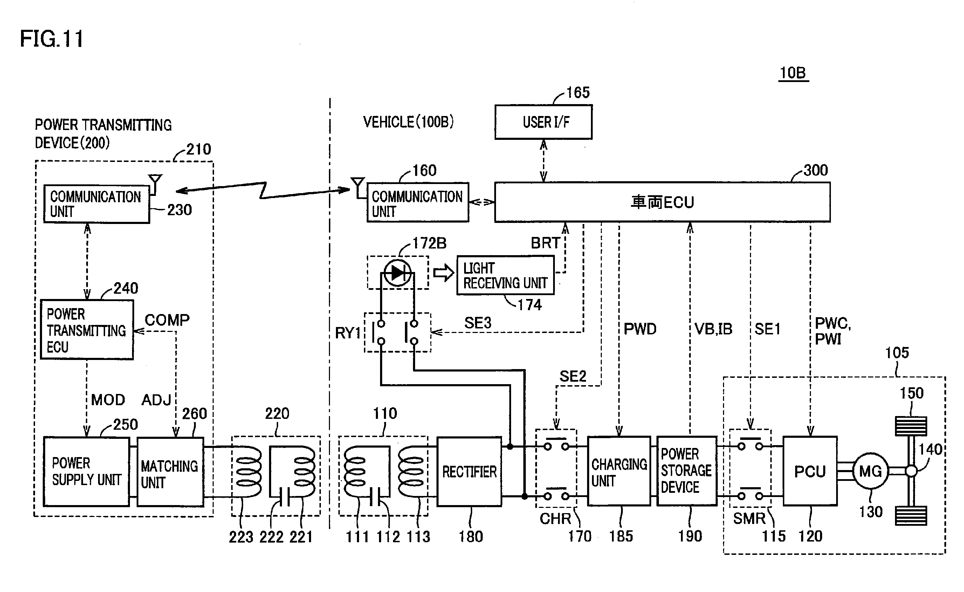

Fig. 11 shows a specific configuration of a contactless power feeding system 10B according to the third embodiment. Vehicle 100B shown in Fig. 11 corresponds to that of the first embodiment shown in Fig 2 with light emitting unit 172 replaced with a light emitting unit 172B. Furthermore, in Fig. 11, rectifier 180 is provided between power receiving unit 110 and CHR 170, and light emitting unit 172B is connected via relay RY1 to a path interconnecting rectifier 180 and CHR 170.

Thus using DC power to cause light emitting unit 172B to emit light allows only a single LED to be used. Furthermore, using DC power can eliminate the necessity of considering the frequency characteristic of LED, and thus allows an inexpensive LED to be used to construct a system and also contributes to reduced cost.

It should be understood that the embodiments disclosed herein are illustrative and non-restrictive in any respect. The scope of the present invention is defined by the terms of the claims, rather than the description above, and is intended to include any modifications within the scope and meaning equivalent to the terms of the claims.

### REFERENCE SIGNS LIST

10, 10A, 10B: contactless power feeding system; 100, 100A, 100B: vehicle; 105: drive device; 110: power receiving unit; 111: secondary resonant coil; 112, 222: capacitor; 113: secondary coil; 115: SMR; 120: PCU; 130: motor generator; 140: driving force transmission gear; 150: driving wheel; 160,230: communication unit; 165: user interface; 170: CHR; 172, 172A, 172B: light emitting unit; 174: light receiving unit; 180: rectifier; 185: charging unit; 190: power storage device; 200: power transmitting device; 210: power supply device; 220: power transmitting unit; 221: primary resonant coil; 223: primary coil; 240: power transmitting ECU; 250: power supply unit; 260: matching unit; 300: vehicular ECU; 600: load; C1, C2: variable capacitor; L: inductor; LED1-LED4, LED11, LED12: LED device; R1, R11: resistor; RY1: relay.

## Claims

1. A power receiving device configured to receive electric power that is transferred from a power transmitting device (200) through electromagnetic resonance contactlessly, comprising:
a power receiving unit (110) configured to electromagnetically resonate with a power transmitting unit (220) included in the power transmitting device (200) to receive electric power from the power transmitting device (200);
a power storage device (190) configured to store therein the electric power received by the power receiving unit (110); and
a light emitting unit (172, 172B) configured to receive the electric power received by the power receiving unit (110) to emit light, and vary in brightness with the electric power received,
the electric power received by the power receiving unit (110) varying according to positional displacement caused between the power transmitting unit (220) and the power receiving unit (110).

2. The power receiving device according to claim 1, further comprising a rectifier (180) configured to rectify the electric power received by the power receiving unit (110) and output the rectified electric power to the power storage device (190), wherein the light emitting unit (172) receives AC power from a path interconnecting the power receiving unit (110) and the rectifier (180).

3. The power receiving device according to claim 2, wherein the light emitting unit (172) includes an LED device (LED1-LED4) configuring a full wave rectification circuit.

4. The power receiving device according to claim 1, further comprising a rectifier (180) configured to rectify the electric power received by the power receiving unit (110) and output the rectified electric power to the power storage device (190), wherein the light emitting unit (172B) receives DC power from a path interconnecting the rectifier (180) and the power storage device (190).

5. The power receiving device according to claim 1, wherein:
the power transmitting device (200) transmits electric power for recognizing the positional displacement between the power transmitting unit (220) and the power receiving unit (110) before the power transmitting device (200) transmits electric power for charging the power storage device (190); and
the light emitting unit (172, 172B) receives the electric power received by the power receiving unit (110) when the power transmitting device (200) transmits electric power for recognizing the positional displacement.

6. The power receiving device according to claim 5, further comprising a switching unit (RY1) configured to switch between supply and cut off of the electric power to the light emitting unit (172, 172B), which is received by the power receiving unit (110).

7. The power receiving device according to claim 5, wherein the transmitted electric power used to transmit electric power for recognizing the positional displacement is smaller than the transmitted electric power used to transmit electric power for charging the power storage device (190).

8. The power receiving device according to any one of claims 1-7, further comprising:
a light receiving unit (174) configured to receive light from the light emitting unit (172, 172B); and
a control device (300) configured to detect the positional displacement between the power transmitting unit (220) and the power receiving unit (110), based on the brightness of the light emitting unit (172, 172B) detected by the light receiving unit (174).

9. The power receiving device according to claim 8, wherein the control device (300) determines that positional displacement between the power transmitting unit (220) and the power receiving unit (110) becomes smaller as the brightness of the light emitting unit (172, 172B) represents a larger value.

10. The power receiving device according to claim 9, wherein the control device (300) transmits electric power for charging the power storage device (190) when a value indicating the brightness of the light emitting unit (172, 172B) exceeds a predetermined threshold value.

11. The power receiving device according to claim 1, further comprising an interface unit (165) configured to provide a user with information, wherein the interface unit (165) provides the user with information relevant to the brightness of the light emitting unit (172, 172A, 172B).

12. The power receiving device according to claim 11, wherein:
the light emitting unit (172, 172A, 172B) includes a light emitting device; and
the light emitting device is disposed at the interface unit (165) to allow the user to visibly recognize light emitted by the light emitting device.

13. The power receiving device according to claim 11, further comprising:
a light receiving unit (174) configured to receive light from the light emitting unit (172, 172B); and
a control device (300) configured to receive a signal relevant to the light of the light emitting unit (172, 172B) received by the light receiving unit (174) and output to the interface unit (165) the information relevant to the brightness of the light emitting unit (172, 172B).

14. A vehicle comprising:
a power receiving unit (110) configured to electromagnetically resonate with a power transmitting unit (220) included in a power transmitting device (200) to receive electric power from the power transmitting device (200) contactlessly;
a power storage device (190) configured to store therein the electric power received by the power receiving unit (110);
a drive device (105) configured to use electric power received from the power storage device (190) to generate force to drive and thus cause the vehicle to travel; and
a light emitting unit (172, 172B) configured to receive the electric power that is received by the power receiving unit (110) to emit light, and vary in brightness with the electric power received,
the electric power received by the power receiving unit (110) varying according to positional displacement caused between the power transmitting unit (220) and the power receiving unit (110).

15. A contactless power feeding system configured to transfer electric power through electromagnetic resonance contactlessly, comprising:
a power transmitting device (200) including a power transmitting unit (220);
and
a power receiving device including a power receiving unit (110) electromagnetically resonating with the power transmitting unit (220),
the power receiving device including
a power storage device (190) configured to store therein electric power received by the power receiving unit (110), and
a light emitting unit (172, 172B) configured to receive the electric power that is received by the power receiving unit (110) to emit light, and vary in brightness with the electric power received,
the electric power received by the power receiving unit (110) varying according to positional displacement caused between the power transmitting unit (220) and the power receiving unit (110).
